# FASCICULE DE BREVET EUROPEEN

(11) **EP 2 307 603 B1**
(45) Date de publication et mention de la délivrance du brevet: **19.11.2014**
(21) Numéro de dépôt: 09740418.0
(22) Date de dépôt: 30.07.2009
(51) Int. Cl.: B29C 70/24, D04H 1/4242, D04H 3/07

(54) **ASSEMBLAGE D'ELEMENTS FIBREUX POUR L'OBTENTION D'UNE PIECE EN MATERIAU COMPOSITE**
FASEREINHEIT FÜR VERBUNDWERKSTÜCK
ASSEMBLY OF FIBROUS ELEMENTS TO OBTAIN A COMPOSITE COMPONENT

(30) Priorité: 01.08.2008 FR 0855322
(43) Date de publication de la demande: 13.04.2011
(73) Titulaire: Airbus Operations, 31060 Toulouse (FR)
(72) Inventeur: BLOT, Philippe, F-44000 Nantes (FR); CHARLES, Julien, 31300 Toulouse (FR); PIANA, Mathieu, 44000 Nantes (FR); LEGRAND, Xavier, F-59100 Roubaix (FR); BESNIER, Joël, F-44100 Nantes (FR)
(74) Mandataire: Fantin, Laurent
(86) Numéro de dépôt international: PCT/FR2009/051535
(87) Numéro de publication internationale: WO 2010/012960

(56) Documents cités:
- FR-A- 2 804 975
- US-A- 4 628 846

## Description

La présente invention se rapporte à un assemblage d'éléments fibreux pour l'obtention d'une pièce en matériau composite ainsi qu'à une pièce en matériau composite comprenant une structure fibreuse obtenue par l'assemblage d'éléments fibreux selon l'invention.

De manière connue, une pièce en matériau composite comprend une structure fibreuse noyée dans une matrice durcie.

La présente invention se rapporte plus particulièrement à une structure fibreuse obtenue par l'assemblage de plusieurs éléments fibreux.

Le document EP-556089 décrit un procédé visant à solidariser deux éléments fibreux, un premier élément fibreux étant appliqué par un de ses chants contre une première face d'un second élément fibreux. Selon ce document, pour assurer la liaison, on introduit, par piquage d'un fil continu, des fibres transversales et traversant ledit second élément à partir de la seconde face dudit second élément. Les boucles de fil obtenues par piquage ont une longueur adaptée pour pénétrer de manière suffisante dans le premier élément afin d'assurer la liaison. Le document FR-2.687.173 décrit une autre technique d'assemblage d'au moins deux éléments fibreux à savoir un premier élément sous forme d'un panneau et au moins un second élément sous forme d'une cornière dont une aile est en appui contre une première face du panneau. Selon ce document pour assurer la liaison, on introduit, par piquage d'un fil continu, des fibres transversales et traversant le premier élément à partir de la seconde face dudit élément. Les boucles de fil obtenues par piquage ont une longueur adaptée pour pénétrer de manière suffisante dans le second élément. Selon des variantes, les fibres transversales prévues en dehors de la zone correspondant à l'aile de la cornière perpendiculaire au panneau peuvent déboucher de part et d'autre de la structure, d'une part au niveau d'une des faces du panneau et d'autre au niveau de la face de la cornière parallèle au panneau. Selon une autre variante, les boucles peuvent être inclinées et ne pas être perpendiculaires à la surface du panneau.

Quelle que soit la variante, les extrémités des boucles disposées au niveau de l'aile de la cornière perpendiculaire au panneau sont noyées dans la structure et ne sont pas débouchantes.

Les techniques de l'art antérieur ne permettent pas d'assurer des résistances suffisantes selon différentes sollicitations mécaniques.

En effet, les pièces en matériau composite contenant des structures obtenues selon l'art antérieur ont des caractéristiques mécaniques limitées en matière de flexion du fait que la zone de jonction est pauvre en fibres et riche en résine, et en matière de cisaillement en raison des mauvaises propriétés des fibres de carbone au cisaillement.

De plus, les pièces en matériau composite sont sujettes au délaminage au niveau de la zone de jonction.

Aussi, la présente invention vise à pallier aux inconvénients de l'art antérieur en proposant un assemblage d'éléments fibreux permettant d'élargir le champ d'application des assemblages obtenus à des parties de la structure d'un aéronef en optimisant leur tenue mécanique sous différentes sollicitations.

A cet effet, l'invention a pour objet une structure fibreuse susceptible d'être noyée dans une matrice pour l'obtention d'une pièce en matériau composite, ladite structure comprenant un premier élément fibreux comportant une première face dite d'appui, au moins un élément fibreux en L comportant une partie appelée base plaquée contre ladite première face d'appui du premier élément fibreux au niveau d'une zone de jonction et une autre partie appelée aile non plaquée contre ledit premier élément fibreux ainsi qu'un autre élément fibreux dont une partie est plaquée contre l'aile dudit au moins élément fibreux en L, lesdits éléments étant assemblés par piquage de fibres à partir de la seconde face du premier élément fibreux de manière à former des boucles, au moins certaines fibres étant obliques par rapport à la face du premier élément fibreux, dans un plan perpendiculaire à la zone de jonction, caractérisée en ce que certaines boucles desdites fibres obliques débouchent à l'extérieur de la surface extérieure d'une aile d'au moins un élément fibreux en L.

D'autres caractéristiques et avantages ressortiront de la description qui va suivre de l'invention, description donnée à titre d'exemple uniquement, en regard des dessins annexés sur lesquels:
- la figure 1 est une coupe transversale illustrant les différents éléments assemblés pour former une structure de fibres selon un premier mode de réalisation,
- la figure 2A est une coupe transversale illustrant les fibres de jonction selon une première variante d'implantation pour l'assemblage de la structure de la figure 1,
- la figure 2B est une vue illustrant les points de piquage selon la variante de la figure 2A à la surface d'un des éléments assemblés,
- la figure 3A est une coupe transversale illustrant les fibres de jonction selon une autre variante d'implantation pour l'assemblage de la structure de la figure 1,
- la figure3B est une vue illustrant en détails l'implantation des fibres de jonction selon la variante de la figure 3A,
- la figure 3C est une vue illustrant les points de piquage selon la variante de la figure 3A à la surface d'un des éléments assemblés,
- la figure 4 est une coupe transversale illustrant les différents éléments assemblés pour former une structure de fibres selon un deuxième mode de réal isation,
- la figure 5A est une coupe transversale illustrant les fibres de jonction selon une première variante d'implantation pour l'assemblage de la structure de la figure 4,
- la figure 5B est une vue illustrant les points de piquage selon la variante de la figure 5A à la surface d'un des éléments assemblés,
- la figure 6A est une coupe transversale illustrant les fibres de jonction selon une autre variante d'implantation pour l'assemblage de la structure de la figure 4,
- la figure 6B est une vue illustrant en détails l'implantation des fibres de jonction selon la variante de la figure 6A,
- la figure 6C est une vue illustrant les points de piquage selon la variante de la figure 6A à la surface d'un des éléments assemblés, et
- les figures 7A à 7C sont des vues en perspective illustrant différentes étapes d'une variante du procédé d'assemblage selon l'invention.

Sur les différentes figures, on a représenté en 10 une structure de fibres obtenue par l'assemblage de plusieurs éléments fibreux distincts non coplanaires. Dans chacun des éléments fibreux, les fibres peuvent être disposées de différentes façons en fonction des caractéristiques recherchées. Ainsi, les fibres peuvent être disposées de manière organisée suivant au moins deux directions déterminées ou être disposées de manière aléatoire.

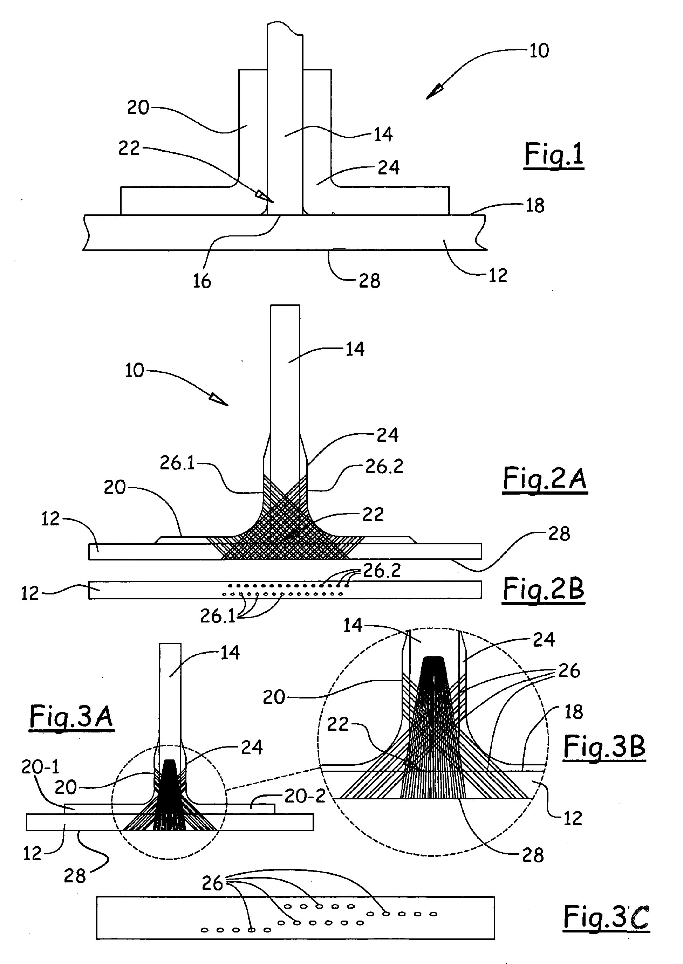

Selon une première variante illustrée sur les figures 1, 2A, 2B, 3A à 3C la présente invention se rapporte plus particulièrement à l'assemblage d'un premier élément fibreux 12 et d'un deuxième élément fibreux 14, ledit deuxième élément fibreux 14 étant appliqué par un de ses chants 16 contre une première face 18 dite d'appui du premier élément fibreux 12. Cet assemblage permet d'obtenir un assemblage en Té, le premier élément formant la semelle du Té, le second élément le pied.

Pour la suite de la description, un repère orthonormé est défini de la manière suivante : les axes X et Y sont contenus dans la semelle, l'axe Y étant commun à la semelle et au pied et l'axe Z étant perpendiculaire aux axes X et Y.

Lorsque les éléments 12 et 14 sont orthogonaux, l'axe Z correspond à la direction du pied.

Toutefois, l'invention n'est pas limitée à ce mode de réalisation, le deuxième élément 14 pouvant ne pas être orthogonal au premier élément 12. De la même manière, le premier élément peut ne pas être un panneau et être courbe ou avoir un profil en U. Dans tous les cas, le premier panneau comprend une face d'appui. Les formes, les dimensions des éléments fibreux ne sont pas détaillées car elles peuvent varier d'une large manière.

L'assemblage comprend au moins un troisième élément fibreux 20 comportant une première partie appelée base plaquée contre le premier élément 12 et une seconde partie appelée aile plaquée contre le second élément 14 de part et d'autre de la zone de jonction 22, le troisième élément fibreux 20 ayant des fibres orientées non parallèles à la zone de jonction, correspondant à l'axe Y, de manière à obtenir une continuité des fibres de part et d'autre de la zone de jonction.

De préférence, l'assemblage comprend un troisième élément fibreux 20 et un quatrième élément fibreux 24 disposés de part et d'autre du second élément 14, les troisième et quatrième éléments fibreux 20 et 24 ayant chacun une première partie appelée base plaquée contre le premier élément 12 et une seconde partie appelée aile plaquée contre le second élément de part et d'autre de la zone de jonction, correspondant à l'axe Y, les troisième et quatrième éléments de renfort ayant des fibres orientées non parallèles à la zone de jonction 22 de manière à obtenir une continuité des fibres de part et d'autre de la zone de jonction.

La continuité des fibres des troisième et quatrième éléments 20, 24 de part et d'autre de la zone de jonction permet un meilleur transfert d'effort entre la semelle et le pied du Té et une plus grande résistance à l'arrachement et en cisaillement.

Par arrachement, on entend une sollicitation qui tend à séparer le pied du Té de la semelle. Par cisaillement, on entend une sollicitation qui tend à translater le pied du Té par rapport à la semelle selon la direction Y.

A titre indicatif, cette configuration permet d'obtenir à l'arrachement des efforts maximums à la rupture 30% plus importants que pour une structure sans élément fibreux de renfort.

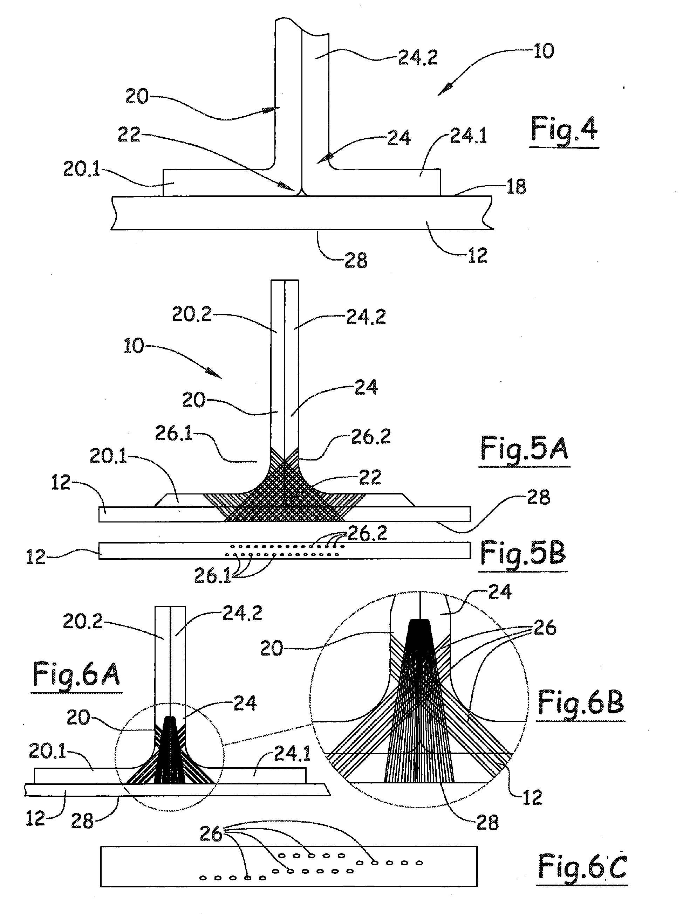

Selon une autre variante illustrée sur les figures 4, 5A, 5B, 6A à 6C, la structure comprend les mêmes éléments fibreux que la structure décrite précédemment à l'exception de l'élément fibreux 14. Ainsi, elle comprend un premier élément fibreux 12, un deuxième élément fibreux 20 non plan, en forme de L dont une première partie appelée base 20.1 est plaquée contre la surface d'appui 18 du premier élément fibreux 12 et un troisième élément fibreux 24 non plan, en forme de L dont une première partie appelée base 24.1 est plaquée contre la surface d'appui 18 du premier élément fibreux 12 et dont une seconde partie appelée aile 24.2 est plaquée contre la seconde partie appelée aile 20.2 du deuxième élément fibreux 20. L'intersection de la base 20.1 et de l'aile 20.2 d'une part et celle de la base 24.1 et de l'aile 24.2 d'autre part sont sensiblement parallèles à l'axe Y et constituent la zone de jonction 22.

Comme précédemment, cet assemblage permet d'obtenir un assemblage en Té, le premier élément formant la semelle du Té, les ailes 20.2 et 20.4 le pied.

En fonction des variantes, le pied peut être ou non orthogonal à la semelle et le premier élément peut ne pas être un panneau et être courbe ou avoir un profil en U.

Les éléments fibreux 20 et 24 en forme de L ont des fibres orientées non parallèles à la zone de jonction 22, correspondant à l'axe Y, de manière à obtenir une continuité des fibres de part et d'autre de la zone de jonction.

La continuité des fibres des éléments fibreux 20, 24 de part et d'autre de la zone de jonction permet un meilleur transfert d'effort entre la semelle et le pied du Té et une plus grande résistance à l'arrachement et en cisaillement. Dans tous les cas, la structure comprend un premier élément fibreux comportant une première face dite d'appui, un deuxième élément fibreux comportant une partie plaquée contre ladite première face d'appui du premier élément fibreux au niveau d'une zone de jonction et une autre partie appelée aile non plaquée contre ledit premier élément fibreux ainsi qu'un troisième élément fibreux dont une partie est plaquée contre l'aile dudit deuxième élément fibreux. Selon les variantes, le troisième élément peut avoir un chant plaqué contre la face d'appui 18 du premier élément 12 comme illustré sur la figure 1 ou le troisième élément peut avoir une forme en L avec une base plaquée contre la face d'appui du premier élément 12 comme illustré sur la figure 4.

Les formes, les dimensions des éléments fibreux ne sont pas détaillées car elles peuvent varier d'une large manière.

Pour obtenir l'assemblage des différents éléments, on introduit par piquage des fibres traversantes 26. De préférence, ces fibres traversantes 26 forment des boucles en U et s'étendent depuis la seconde face 28 du premier élément, opposée à la face d'appui 18, jusqu'à une surface extérieure du second élément 14 et/ou une surface extérieure d'au moins un élément fibreux de renfort 20, 24, une surface extérieure correspondant à une surface qui n'est pas en contact avec au moins l'un des autres éléments de la structure fibreuse.

Les fibres traversantes 26 sont relativement souples de manière à pouvoir former des boucles et être piquées avec un dispositif de piquage conventionnel.

Contrairement à un piquage orthogonal (perpendiculaire à la seconde face 28), les parties rectilignes des boucles sont disposées dans la structure fibreuse alors que la partie courbe des boucles ne sont pas formées dans la structure fibreuse mais à l'extérieur, le piquage étant débouchant. Cet agencement permet de ne pas trop perturber l'arrangement des fibres de la structure fibreuse. Selon une caractéristique importante de l'invention, au moins certaines fibres sont obliques par rapport à la face 28, dans un plan XZ perpendiculaire à la zone de jonction correspondant à l'axe Y, et les boucles de certaines de ces fibres débouchent au niveau de la surface extérieure d'au moins une aile 20.2 et/ou 24.2 des éléments fibreux 20 et 24.

Cette caractéristique permet d'empêcher l'apparition de délaminage au niveau de l'interface entre les éléments fibreux 12, 20 et 24 ou 12, 14, 20 et 24 au niveau de la zone de jonction 22.

Cette configuration de piquage débouchant au niveau de la surface extérieure des ailes permet d'obtenir en cisaillement un effort au premier endommagement équivalent à une structure non renforcée, la mise en place des éléments de renfort fibreux avec un piquage orthogonal ayant tendance à le réduire de 30%. Cette configuration de piquage non débouchant contribue également à améliorer l'effort maximum à la rupture à l'arrachement.

Sur les figures 2A, 2B, 5A et 5B, on a illustré une première configuration de piquage, une première série de rangées de fibres 26.1 traversant la structure depuis la seconde face 28 de l'élément fibreux 12 jusqu'à la surface extérieure de l'élément fibreux 20, une seconde série de rangées de fibres 26.2 traversant la structure depuis la seconde face 28 de l'élément fibreux 12 jusqu'à la surface extérieure de l'élément fibreux 24.

Par rapport à la seconde face 28 de l'élément fibreux, dans un plan perpendiculaire à la zone de jonction correspondant à l'axe Y, les fibres 26.1 de la première série font un angle variant de 30 à 60°, de préférence égal à 45°, et les fibres 26.2 de la seconde série font un angle variant de 120° à 150°, de préférence égal à 135°.

De préférence, certaines fibres 26.1 qui débouchent au niveau de la surface extérieure de l'aile de l'élément fibreux 20 sont sensiblement tangentes à la surface extérieure de l'élément fibreux 24 au niveau de la zone de jonction, aucune n'étant sécante avec la surface extérieure de l'élément fibreux 24. De la même manière, certaines fibres 26.1 qui débouchent au niveau de la surface extérieure de l'aile de l'élément fibreux 24 sont sensiblement tangentes à la surface extérieure de l'élément fibreux 20, aucune n'étant sécante avec la surface extérieure de l'élément fibreux 20.

Les rangées de fibres sont chacune disposées dans des plans parallèles entre eux de manière à ce que les fibres ne s'entrecroisent pas.

Les fibres traversantes 26 d'une même rangée peuvent ne pas être parallèles entre elles.

Les deux séries de rangées peuvent être associées à un piquage orthogonal ou convergent comme illustré sur les figures 3A, 3B, 3C, 6A, 6B et 6C.

Ainsi, selon ce mode de réalisation, les fibres 26 sont réparties en une première série de rangées de fibres orientées selon un angle variant de 30° à 60° par rapport à la seconde face 28, en une deuxième série de rangées de fibres orientées selon un angle variant de 120° à 150° par rapport à la seconde face 28 et en une troisième série de fibres sensiblement orthogonales ou convergentes. Ces différentes configurations permettent d'améliorer nettement la tenue mécanique en cisaillement grâce aux éléments fibreux en L. La configuration du piquage permet d'améliorer la tenue mécanique à l'arrachement découlant de l'utilisation d'éléments fibreux en L.

Au cisaillement, si on compare l'effort au premier endommagement d'une structure avec et sans piquage :
- l'amélioration apportée est de l'ordre de + 250% dans le cas d'une structure selon la figure 1, et
- l'amélioration apportée est de l'ordre de + 260% dans le cas d'une structure selon la figure 4,
cette comparaison étant réalisée pour des structures de même masse.

Pour le piquage, on utilise un dispositif de piquage tel que décrit dans le document EP-556089, ce dispositif pouvant être incliné pour obtenir les rangées de fibres inclinées.

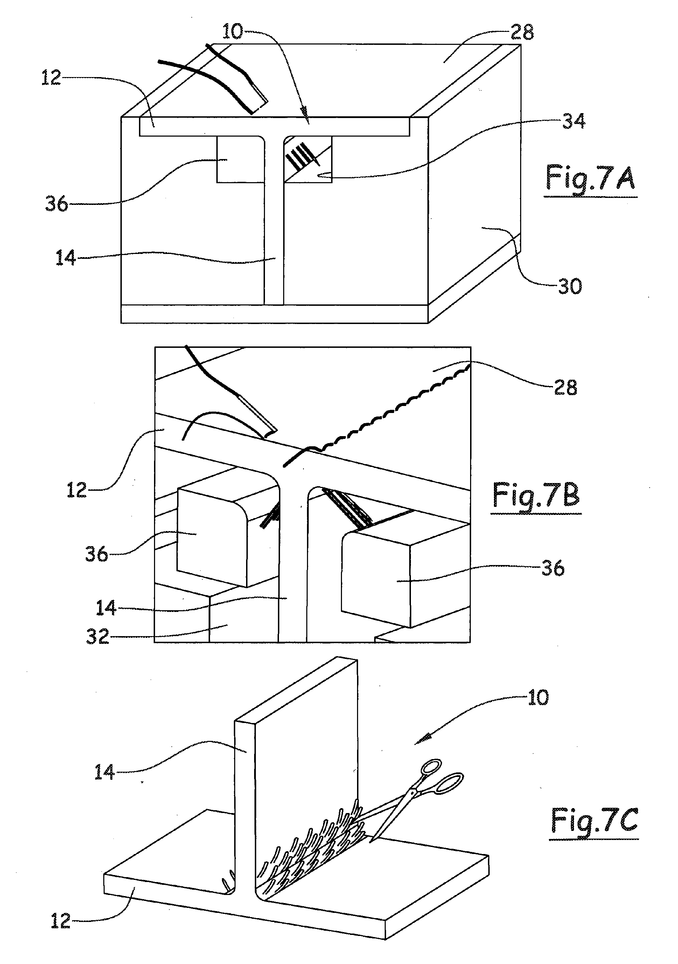

L'outillage pour le maintien des préformes est décrit sur les figures 7A et 7B. Il comprend une partie rigide 30 comprenant une forme 32 en creux apte à recevoir les éléments de la structure de fibres et à les maintenir préalablement au piquage. Après la mise en place des différents éléments, la seconde face 28 du premier élément fibreux 12 est dégagée et orientée en direction du dispositif de piquage.

Cette partie rigide 30 comprend de part et d'autre du second élément 14, au niveau de l'angle formé par ledit élément 14 et le premier élément 12 un évidement 34 rempli d'un bloc 36 de matériau suffisamment souple pour être transpercé par une aiguille de piquage et suffisamment rigide pour retenir les boucles des fibres 26. A titre d'exemple, les blocs 36 sont en mousse de polystyrène.

Pour mieux expliquer la retenue des boucles lors du piquage, l'opération de piquage est illustrée sur la figure 7A avec un bloc 36 transparent et sur la figure 7B avec des blocs 36 écartés de la structure fibreuse pour montrer le maintien des boucles dans les blocs 36.

Après l'opération de piquage, la structure 10 fibreuse assemblée ainsi que les blocs 36 sont retirés de l'outillage. En suivant, on découpe les fibres 26 afin de séparer la structure des blocs et obtenir une structure 10 assemblée grâce à des fibres 26 traversantes, comme illustré sur la figure 7C.

## Revendications

1. Structure fibreuse susceptible d'être noyée dans une matrice pour l'obtention d'une pièce en matériau composite, ladite structure comprenant un premier élément fibreux (12) comportant une première face dite d'appui (18), au moins un élément fibreux (20) en L comportant une partie appelée base plaquée contre ladite première face d'appui (18) du premier élément fibreux (12) au niveau d'une zone de jonction (22) et une autre partie appelée aile non plaquée contre ledit premier élément fibreux (12) ainsi qu'un autre élément fibreux dont une partie est plaquée contre l'aile dudit au moins élément fibreux (20) en L, lesdits éléments étant assemblés par piquage de fibres (26) à partir de la seconde face (28) du premier élément fibreux (12) de manière à former des boucles, au moins certaines fibres (26) étant obliques par rapport à la face (28) du premier élément fibreux (12), dans un plan perpendiculaire à la zone de jonction (22), **caractérisée en ce que** certaines boucles desdites fibres obliques (26) débouchent à l'extérieur de la surface extérieure d'une aile (20.2) d'au moins un élément fibreux (20) en L.

2. Structure fibreuse selon la revendication 1, **caractérisée en ce qu'**elle comprend deux éléments fibreux (20, 24) en L dont les ailes sont plaquées l'une contre l'autre.

3. Structure fibreuse selon la revendication 1 ou 2, **caractérisée en ce qu'**elle comprend deux éléments fibreux (20, 24) en L disposés de part et d'autre d'un autre élément fibreux (14) dont le chant (16) est plaquée contre la face d'appui (18) du premier élément fibreux (12).

4. Structure fibreuse selon la revendication 2 ou 3, **caractérisée en ce qu'**elle comprend une première série de rangées de fibres (26.1) traversant ladite structure depuis la seconde face (28) du premier élément fibreux (12) jusqu'à la surface extérieure de l'aile d'un premier élément fibreux (20) en L, une seconde série de rangées de fibres (26.2) traversant la structure depuis la seconde face (28) du premier élément fibreux (12) jusqu'à la surface extérieure de l'aile d'un second élément fibreux (24) en L.

5. Structure fibreuse selon la revendication 4, **caractérisée en ce que** les fibres (26.1) de la première série de rangées font un angle variant de 30 à 60° par rapport à la seconde face (28) du premier élément fibreux (12) et les fibres (26.2) de la seconde série de rangées font un angle variant de 120° à 150° par rapport à la seconde face (28) du premier élément fibreux (12).

6. Structure fibreuse selon la revendication 4 ou 5, **caractérisée en ce que** certaines fibres (26.1) qui débouchent au niveau de la surface extérieure de l'aile d'un premier élément fibreux (20) en L sont sensiblement tangentes à la surface extérieure du second l'élément fibreux (24) en L au niveau de la zone de jonction, aucune n'étant sécante avec la surface extérieure dudit second élément fibreux (24) en L.

7. Structure fibreuse selon la revendication 4 ou 5, **caractérisée en ce que** certaines fibres (26.1) qui débouchent au niveau de la surface extérieure de l'aile d'un premier élément fibreux (20) en L sont sensiblement tangentes à la surface extérieure du second l'élément fibreux (24) en L au niveau de la zone de jonction, aucune n'étant sécante avec la surface extérieure dudit second élément fibreux (24) en L et **en ce que** certaines fibres (26.1) qui débouchent au niveau de la surface extérieure de l'aile dudit second l'élément fibreux (24) en L sont sensiblement tangentes à la surface extérieure dudit premier élément fibreux (20) en L, aucune n'étant sécante avec la surface extérieure dudit premier élément fibreux (20) en L.

8. Structure fibreuse selon l'une quelconque des revendications 4 à 7, **caractérisée en ce qu'**elle comprend une troisième série de fibres (26) sensiblement orthogonales ou convergentes.

9. Outillage pour l'assemblage d'une structure fibreuse en T selon l'une quelconque des revendications précédentes, comprenant une partie rigide (30) comprenant une forme (32) en creux apte à recevoir les éléments fibreux de ladite structure et à les maintenir, **caractérisé en ce que** ladite partie rigide (30) comprend de part et d'autre du pied du T de la structure fibreuse, au niveau de l'angle formé par le pied et la semelle de ladite structure fibreuse un évidement (34) rempli d'un bloc (36) de matériau suffisamment souple pour être transpercé par une aiguille de piquage et suffisamment rigide pour retenir des boucles de fibres (26).

10. Pièce en matériau composite comprenant une structure fibreuse noyée dans une matrice, ladite structure comprenant un premier élément fibreux (12) comportant une première face dite d'appui (18), au moins un élément fibreux (20) en L comportant une partie appelée base plaquée contre ladite première face d'appui (18) du premier élément fibreux (12) au niveau d'une zone de jonction (22) et une autre partie appelée aile non plaquée contre ledit premier élément fibreux (12) ainsi qu'un autre élément fibreux dont une partie est plaquée contre l'aile dudit au moins élément fibreux (20) en L, lesdits éléments étant assemblés par piquage de fibres (26) à partir de la seconde face (28) du premier élément fibreux (12) de manière à former des boucles, au moins certaines fibres (26) étant obliques par rapport à la face (28) du premier élément fibreux (12), dans un plan perpendiculaire à la zone de jonction (22), **caractérisée en ce que** certaines boucles desdites fibres obliques (26) débouchent au niveau de la surface extérieure d'une aile (20.2) d'au moins un élément fibreux (20) en L.

## Patentansprüche

1. Faserstruktur, die dazu geeignet ist, in eine Matrix eingetaucht zu werden, um ein Werkstück aus Verbundmaterial zu erhalten, mit einem ersten Faserelement (12), das eine sogenannte erste Stützfläche (18) aufweist, mit wenigstens einem L-förmigen Faserelement (20), das einen Basis genannten Bereich aufweist, der an der ersten Stützfläche (18) des ersten Faserelements (12) in einem Verbindungsbereich (22) anliegt, und einen Flügel genannten weiteren Bereich aufweist, der nicht am ersten Faserelement (12) anliegt, und mit einem weiteren Faserelement, von dem ein Teil am Flügel des wenigstens einen L-förmigen Faserelements (20) anliegt, wobei die Elemente ausgehend von der zweiten Seite (28) des ersten Faserelements (12) durch Vernähen von Fasern (26) unter Schleifenbildung verbunden sind, wobei bestimmte Fasern (26) bezüglich der Seite (28) in einer im rechten Winkel zum Verbindungsbereich (22) ausgerichteten Ebene schräg angeordnet sind, **dadurch gekennzeichnet, dass** bestimmte Schleifen der schrägen Fasern (26) an der äußeren Oberfläche eines Flügels (20.2) des wenigstens einen L-förmigen Faserelements (20) heraustreten.

2. Faserstruktur nach Anspruch 1, **dadurch gekennzeichnet, dass** diese zwei L-förmige Faserelemente (20, 24) aufweist, deren Flügel einander zugewandt angeordnet sind.

3. Faserstruktur nach Anspruch 1 oder 2, **dadurch gekennzeichnet, dass** diese zwei L-förmige Faserelemente (20, 24) aufweist, die auf beiden Seiten eines anderen Faserelements (14) angeordnet sind, dessen Schmalseite (16) an die Stützseite (18) des ersten Faserelements (20) angesetzt sind.

4. Faserstruktur nach Anspruch 2 oder 3, **dadurch gekennzeichnet, dass** diese eine erste Folge von Reihen von Fasern (26.1) aufweist, die die Struktur von der zweiten Seite (28) des ersten Faserelements (12) aus bis zur äußeren Oberfläche des Flügels eines ersten L-förmigen Faserelements (20) durchquert, wobei eine zweite Folge von Reihen von Fasern (26.2) die Struktur von der zweiten Seite (28) des ersten Faserelements (12) aus bis zur äußeren Oberfläche des Flügels eines zweiten L-förmigen Faserelements (24) durchquert.

5. Faserstruktur nach Anspruch 4, **dadurch gekennzeichnet, dass** die Fasern (26.1) der ersten Folge von Reihen einen Winkel von 30 bis 60° bezüglich der zweiten Seite (28) des ersten Faserelements (12) bilden und die Fasern (26.2) der zweiten Folge von Reihen einen Winkel zwischen 120° und 150° bezüglich der zweiten Seite (28) des ersten Faserelements (12) bilden.

6. Faserstruktur nach Anspruch 4 oder 5, **dadurch gekennzeichnet, dass** bestimmte Fasern (26.1), die im Bereich der äußeren Oberfläche des Flügels eines ersten L-förmigen Faserelements (20) heraustreten, im Wesentlichen Tangenten bezüglich der äußeren Oberfläche des zweiten L-förmigen Faserelements (24) im Verbindungsbereich sind, wobei keine von diesen eine Sekante der äußeren Oberfläche des zweiten L-förmigen Faserelements (24) ist.

7. Faserstruktur nach Anspruch 4 oder 5, **dadurch gekennzeichnet, dass** bestimmte Fasern (26.1), die im Bereich der äußeren Oberfläche des Flügels eines ersten L-förmigen Faserelements (20) heraustreten, im Wesentlichen Tangenten bezüglich der äußeren Oberfläche des zweiten L-förmigen Faserelements (24) im Verbindungsbereich sind, wobei keine von diesen eine Sekante der äußeren Oberfläche des zweiten L-förmigen Faserelements (24) ist, und dass bestimmte Fasern (26.1), die im Bereich der äußeren Oberfläche des Flügels des zweiten L-förmigen Faserelements (24) heraustreten, im Wesentlichen Tangenten zur äußeren Oberfläche des ersten L-förmigen Faserelements (20) sind, wobei keine von diesen eine Sekante der äußeren Oberfläche des ersten L-förmigen Faserelements (20) ist.

8. Faserstruktur nach einem der Ansprüche 4 bis 7, **dadurch gekennzeichnet, dass** diese eine dritte Folge von im Wesentlichen orthogonalen oder konvergenten Fasern (26) aufweist.

9. Werkzeug zum Zusammenbauen einer T-förmigen Faserstruktur nach einem der vorhergehenden Ansprüche mit einem festen Teil (30), der eine Hohlform (32) aufweist, die dazu geeignet ist, die Faserelemente der Struktur aufzunehmen und diese zu halten, **dadurch gekennzeichnet, dass** der feste Teil (30) auf beiden Seiten des Fußes des T der Faserstruktur im Bereich des von Fuß und Grundplatte der Faserstruktur gebildeten Winkels eine Ausnehmung (34) aufweist, die mit einem Block (36) aus Material gefüllt ist, das ausreichend weich ist, um von einer Nähnadel durchdrungen zu werden, und ausreichend fest, um die Faserschleifen (26) zu halten.

10. Werkstück aus Verbundmaterial mit einer in eine Matrix eingetauchten Faserstruktur mit einem ersten Faserelement (12), das eine sogenannte erste Stützfläche (18) aufweist, mit wenigstens einem L-förmigen Faserelement (20), das einen Basis genannten Bereich aufweist, der an der ersten Stützfläche (18) des ersten Faserelements (12) in einem Verbindungsbereich (22) anliegt, und einen Flügel genannten weiteren Bereich aufweist, der nicht am ersten Faserelement (12) anliegt, und mit einem weiteren Faserelement, von dem ein Teil am Flügel des wenigstens einen L-förmigen Faserelements (20) anliegt, wobei die Elemente ausgehend von der zweiten Seite (28) des ersten Faserelements (12) durch Vernähen von Fasern (26) unter Schleifenbildung verbunden sind, wobei bestimmte Fasern (26) bezüglich der Seite (28) in einer im rechten Winkel zum Verbindungsbereich (22) ausgerichteten Ebene schräg angeordnet sind, **dadurch gekennzeichnet, dass** bestimmte Schleifen der schrägen Fasern (26) an der äußeren Oberfläche eines Flügels (20.2) des wenigstens einen L-förmigen Faserelements (20) heraustreten.

## Claims

1. Fiber structure that can be embedded in a matrix for obtaining a piece made of composite material, whereby said structure comprises a first fiber element (12) that comprises a first so-called support surface (18), at least one L-shaped fiber element (20) comprising a part called a base that is flattened against said first support surface (18) of the first fiber element (12) at a junction zone (22) and another part called a wing that is not flattened against said first fiber element (12), as well as another fiber element of which one part is flattened against the wing of said at least one L-shaped fiber element (20), whereby said elements are assembled by tapping fibers (26) from the second surface (28) of the first fiber element (12) in such a way as to form loops, at least certain fibers (26) being oblique relative to the surface (28) of the first fiber element (12), in a plane that is perpendicular to the junction zone (22), **characterized in that** certain loops of said oblique fibers (26) protrude to the outside of the outer surface of a wing (20.2) of at least one L-shaped fiber element (20).

2. Fiber structure according to Claim 1, wherein it comprises two L-shaped fiber elements (20, 24) whose wings are flattened against one another.

3. Fiber structure according to Claim 1 or 2, wherein it comprises two L-shaped fiber elements (20, 24) that are arranged on both sides of another fiber element (14) whose edge (16) is flattened against the support surface (18) of the first fiber element (12).

4. Fiber structure according to Claim 2 or 3, wherein it comprises a first series of rows of fibers (26.1) passing through said structure from the second surface (28) of the first fiber element (12) to the outer surface of the wing of a first L-shaped fiber element (20), and a second series of rows of fibers (26.2) passing through the structure from the second surface (28) of the first fiber element (12) to the outer surface of the wing of a second L-shaped fiber element (24).

5. Fiber structure according to Claim 4, wherein the fibers (26.1) of the first series of rows form an angle that varies from 30° to 60° relative to the second surface (28) of the first fiber element (12), and the fibers (26.2) of the second series of rows form an angle that varies from 120° to 150° relative to the second surface (28) of the first fiber element (12).

6. Fiber structure according to Claim 4 or 5, wherein certain fibers (26.1) that protrude at the outer surface of the wing of a first L-shaped fiber element (20) are essentially tangent to the outer surface of the second L-shaped fiber element (24) at the junction zone, none being secant with the outer surface of said second L-shaped fiber element (24).

7. Fiber structure according to Claim 4 or 5, wherein certain fibers (26.1) that protrude at the outer surface of the wing of a first L-shaped fiber element (20) are essentially tangent to the outer surface of the second L-shaped fiber element (24) at the junction zone, none being secant with the outer surface of said second L-shaped fiber element (24), and wherein certain fibers (26.1) that protrude at the outer surface of the wing of said second L-shaped fiber element (24) are essentially tangent to the outer surface of said first L-shaped fiber element (20), none being secant with the outer surface of said first L-shaped fiber element (20).

8. Fiber structure according to any of Claims 4 to 7, wherein it comprises a third series of fibers (26) that are essentially orthogonal or convergent.

9. Device for the assembly of a T-shaped fiber structure according to any of the preceding claims, comprising a rigid part (30) that comprises a hollow shape (32) that can receive the fiber elements of said structure and can hold them, wherein on both sides of the base of the T of the fiber structure, at the angle that is formed by the base and the cross-piece of said fiber structure, said rigid part (30) comprises a recess (34) that is filled with a block (36) made of material that is flexible enough to be pierced by a tapping needle and rigid enough to hold fiber loops (26).

10. Piece made of composite material that comprises a fiber structure that is embedded in a matrix, said structure comprising a first fiber element (12) that comprises a first so-called support surface (18), at least one L-shaped fiber element (20) comprising a part called a base that is flattened against said first support surface (18) of the first fiber element (12) at a junction zone (22) and another part called a wing that is not flattened against said first fiber element (12), as well as another fiber element of which one part is flattened against the wing of said at least one L-shaped fiber element (20), whereby said elements are assembled by tapping of fibers (26) from the second surface (28) of the first fiber element (12) in such a way as to form loops, at least certain fibers (26) being oblique relative to the surface (28) of the first fiber element (12), in a plane that is perpendicular to the junction zone (22), wherein certain loops of said oblique fiber (26) protrude at the outer surface of a wing (20.2) of at least one L-shaped fiber element (20).
